# EUROPEAN PATENT APPLICATION

(11) **EP 2 743 528 A1**
(43) Date of publication of application: **18.06.2014**
(21) Application number: 12821826.0
(22) Date of filing: 01.08.2012
(51) Int. Cl.: F16C 33/64, F16C 19/36, F16C 33/58, F16C 33/62, F16C 35/067, F16C 35/077

(54) **TAPERED ROLLER BEARING AND MOUNTING STRUCTURE THEREFOR**

(30) Priority: 11.08.2011 JP 2011175691
(71) Applicant: NTN Corporation, Osaka-shi, Osaka 550-0003 (JP)
(72) Inventor: UMEMOTO Takehiko, Kuwana-shi Mie 511-0811 (JP); SHIMIZU Yasuhiro, Kuwana-shi Mie 511-0811 (JP); SONE Katsunori, Kuwana-shi Mie 511-0811 (JP); ITO Tomohito, Kuwana-shi Mie 511-0811 (JP); TOYODA Tsukasa, Kuwana-shi Mie 511-0811 (JP)
(74) Representative: Grünecker, Kinkeldey, Stockmair & Schwanhäusser
(86) International application number: PCT/JP2012/069563
(87) International publication number: WO 2013/021887

(57) **Abstract**

A tapered roller bearing (1) includes an outer race (5). The outer race (5) is formed by pressing a steel plate, instead of conventional turning, to reduce the manufacturing cost of the outer race (5). The outer race (5) includes a flange portion (11) provided at the large-diameter end of the outer race (5), and a cylindrical portion (12) provided at the small-diameter end of the outer race (5). The flange portion (11) and the cylindrical portion (12) of the outer race (5) are brought into engagement with a housing having an inner peripheral surface corresponding in shape to the outer peripheral surface of the outer race (5) so that the tapered roller bearing (1) can be easily mounted to the housing (2).

## Description

### TECHNICAL FIELD

This invention relates to an inexpensive tapered roller bearing and a mounting structure thereof.

### BACKGROUND ART

Tapered roller bearings are a kind of rolling bearings which can simultaneously support both large radial loads and thrust loads and are thus widely used. Generally speaking, tapered roller bearings include an outer race having a tapered raceway on its outer peripheral surface, an outer race having a tapered raceway on its inner peripheral surface, a plurality of tapered rollers disposed between the raceways of the inner and outer races, and a retainer rollably retaining the tapered rollers. The inner race is integrally formed with a large flange at the large-diameter end thereof, and a small flange at the small-diameter end thereof to prevent separation of the tapered rollers and the retainer from the inner race (see the below-identified Non-patent document 1).

### PRIOR ART DOCUMENT(S)

### NON-PATENT DOCUMENT(S)

Non-patent document 1: "Tapered Roller Bearings", General Catalogue of Rolling Bearings, NTN Corporation, CAT. No. 2202-VII/J, B-133, 134

### SUMMARY OF THE INVENTION

### OBJECT OF THE INVENTION

The outer races of such tapered roller bearings are ordinarily manufactured by shaving (turning) a mass of steel material, and the shaved steel material is subjected to heat treatment and polished. Such manufacturing steps are relatively expensive, and tend to push the entire manufacturing cost of such bearings.

A first object of the present invention is to provide a tapered roller bearing of which the outer race can be manufactured at a low cost. A second object of the present invention is to provide a mounting structure for mounting such a tapered roller bearing to a housing.

### MEANS FOR ACHIEVING THE OBJECT

In order to achieve the first object, the present invention provides a tapered roller bearing comprising an inner race having a tapered raceway, an outer race having a tapered raceway, a plurality of tapered rollers mounted between the tapered raceways of the inner race and the outer race, and a retainer rollably retaining the tapered rollers, wherein the outer race is formed by pressing a steel plate.

The raceway of the outer race is preferably subjected to shot peening, because such shot peening improves the wear resistance of the raceway of the outer race, and also improves the rolling fatigue life by applying a residual compressive stress to the raceway.

Preferably, the raceway of the outer race has a convex axial section. Alternatively, the outer race includes a tapered portion having the raceway of the outer race and an outer peripheral surface, and the raceway of the outer race and the outer peripheral surface of the tapered portion each have a convex axial section. With either of these arrangements, since the outer race has a smaller wall thickness at both ends thereof than at the central portion thereof, the surface pressure that acts on the outer race during operation is uniform, so that the maximum surface pressure and the surface pressure transmitted from the edges of the rollers 6 are low. This improves the load resistance of the outer race.

In a further arrangement, an interlayer in the form of a porous sintered member made of bronze powder is formed on the outer peripheral surface of the outer race, and an outer layer made of tetrafluoroethylene resin containing a filler is superposed on the interlayer, to improve creep resistance of the outer race.

In order to achieve the second object, the present invention provides a mounting structure for mounting the outer race of the above-described tapered roller bearing to a housing having an inner periphery corresponding in shape to the outer periphery of the outer race, wherein the outer race comprises a tapered portion having the raceway of the outer race, and wherein the outer race further comprises at least one of a flange portion extending radially outwardly from the large-diameter end of the tapered portion and in engagement with the housing, and a cylindrical portion extending in the axial direction of the outer race from the small-diameter end of the tapered portion and in engagement with the housing. By providing the outer race with at least one of the above-described flange portion and cylindrical portion, the tapered rolling bearing can be easily mounted to the housing.

If the flange portion is provided at the large-diameter end of the outer race, at least one cutout may be formed in the outer periphery of the flange portion, and the housing may be formed with an engaging portion engaged in the cutout, to prevent rotation of the outer race. Alternatively, at least one bolt hole may be formed in the flange portion, and a bolt may be passed through the bolt hole and threaded into the housing, thereby preventing rotation of the outer race and also to prevent the outer race from being pulled out. If the flange portion is bolted to the housing, a protrusion may be formed on the outer periphery of the flange portion in the vicinity of the bolt hole such that the protrusion is bent so as to abut the head of the bolt with the bolt threaded into the housing. The protrusion serves to prevent loosening of the bolt.

If the cylindrical portion is provided at the small-diameter end of the outer race, the outer peripheral surface of the cylindrical portion may have a shoulder such that the outer peripheral surface of the cylindrical portion has a larger diameter at the distal end thereof than at the proximal end thereof, and the housing may be formed with an engaging surface facing the shoulder, to prevent the outer race from being pulled out. Alternatively, at least one engaging protrusion may be provided to extend radially outwardly from the distal end of the cylindrical portion, and the housing may be formed with an engaging recess in which the engaging protrusion is engaged, thereby preventing the outer race from being pulled out and also preventing rotation of the outer race.

As further alternative means for preventing rotation of the outer race, the outer periphery of the tapered portion and a portion of the inner periphery of the housing corresponding to the outer periphery of the tapered portion have an oval section or a polygonal section with corners rounded, as taken along a plane perpendicular to an axis of the outer race. For the same purpose, the outer periphery of the cylindrical portion and a portion of the inner periphery of the housing corresponding to the outer periphery of the cylindrical portion may have an oval section or a polygonal section with corners rounded, as taken along a plane perpendicular to an axis of the outer race.

If the tapered roller bearing has neither of the sintered layer and the resin layer on the outer peripheral surface of the outer race, preferably, the housing is formed with annular recesses facing two respective ends of the outer race, seal members are received in the respective annular recesses such that a space is defined by the seal members, the outer race and the housing, and this space is filled with a lubricant. Alternatively, curved portions are formed at two respective ends of the outer race, the curved portions having openings facing the housing, seal members are received in the respective curved portions such that a space is defined by the seal members, the outer race and the housing, and this space is filled with a lubricant. In the latter arrangement, the housing may be formed with an engaging surface axially facing the distal end of one of the curved portions provided at the small-diameter end of the outer race.

### ADVANTAGES OF THE INVENTION

Since the outer race of the tapered roller bearing according to the present invention is formed by pressing a steel plate, the outer ring can be manufactured without turning and thus at a low cost.

With the mounting structure for the tapered roller bearing according to the present invention, since the outer race, which is formed by pressing a steel plate, includes at least one of the above-described flange portion, which extends radially outwardly from the large-diameter end of the outer race and in engagement with the housing, and the above-described cylindrical portion, which extends axially from the small-diameter end of the outer race and in engagement with the housing, the tapered roller bearing can be easily mounted to the housing.

### BRIEF DESCRIPTION OF THE DRAWINGS

Fig. 1 is a vertical sectional view of a tapered roller bearing of a first embodiment, as mounted in position.
Figs. 2(a) and 2(b) are sectional views of modifications of an outer race of Fig. 1 as mounted in a housing, as taken along planes perpendicular to the axis of the respective outer races.
Figs. 3(a) and 3(b) are sectional views of further modifications of the outer race of Fig. 1 as mounted in a housing, as taken along planes perpendicular to the axis of the respective outer races.
Figs. 4(a) and 4(b) are vertical sectional views of modifications of the outer race of Fig. 1, showing the wall thickness distributions of the respective outer races.
Fig. 5(a) is a vertical sectional view of a modification of a mounting structure for the tapered roller bearing of Fig. 1; Fig. 5(b) is a sectional view taken along line IV-IV of Fig. 5(a); and Fig. 5(c) is a vertical sectional view of a portion of the outer race of Fig. 5(a) including its small-diameter end portion.
Fig. 6(a) is a vertical sectional view of a further modification of the mounting structure for the tapered roller bearing of Fig. 1 at the large-diameter end of the outer race; and Fig. 6(b) is a sectional view taken along line V-V of Fig. 6(a).
Fig. 7(a) is a vertical sectional view of a further modification of the mounting structure for the tapered roller bearing of Fig. 1 at the small-diameter end of the outer race; and Fig. 7(b) is a sectional view taken along line VI-VI of Fig. 7(a).
Fig. 8 is a vertical sectional view of a tapered roller bearing of a second embodiment as mounted in position.
Figs. 9(a) and 9(b) are vertical sectional views of modified outer races of which their ends differ in shape from the outer race of Fig. 7.
Fig. 10(a) is a vertical sectional view of a tapered roller bearing of a third embodiment as mounted in position; and Fig. 10(b) is an enlarged vertical sectional view of a portion of an outer race of Fig. 10(a) including its small-diameter end portion.

### BEST MODE FOR EMBODYING THE INVENTION

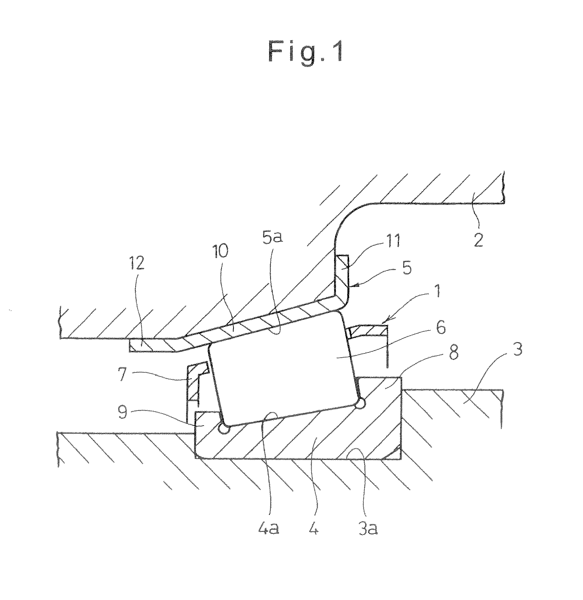

The embodiments are now described with reference to the drawings, of which Fig. 1 shows the tapered roller bearing 1 of the first embodiment, as mounted between a housing 2 and a rotary shaft 3. The tapered roller bearing 1 includes an inner race 4 formed with a tapered raceway 4a on its outer peripheral surface, an outer race 5 formed with a tapered raceway 5a on its inner peripheral surface, and a plurality of tapered rollers 6 mounted between the raceways 4a and 5a of the inner and outer races 4 and 5. The tapered rollers 6 are rollably retained by a retainer 7. The inner race 4 is integrally formed with a large-flange 8 at its large-diameter end and a small flange 9 at its small-diameter end to prevent separation of the tapered rollers 6 and the retainer 7 from the inner race 4. The inner race 4 is fitted in an annular groove 3a formed in the outer peripheral surface of the rotary shaft 3. The outer race 5 is mounted to the inner peripheral surface of the housing 2.

The outer race is formed by pressing a hot rolled or cold rolled steel sheet made of soft steel for general purpose use, carbon tool steel, or an alloy steel for machine structural use. After pressing, the steel plate is subjected to immersion quenching, induction quenching, or carburizing and quenching to impart the outer race a hardness distribution at the same level as conventional outer races.

The thickness of the steel pate to be formed into the outer race 5 is determined within the range of 0.8 to 3.6 mm according to the average diameter of the tapered rollers 6 (which is 4-30 mm in this embodiment). This wall thickness range is determined such that the after quenching, the outer race 5 has a wall thickness of about 0.6 to 1.6 mm at its portion where a hardness of Hv 550 or over is required (the portion that receives loads) if the average diameter of the tapered rollers 6 is 4 mm, and about 1.5 to 3.0 mm if the average diameter of the tapered rollers 6 is 30 mm, while taking into consideration the allowable tolerance of the steel plate wall thickness (±0.06 to ±0.20 mm) and a change in wall thickness after pressing (up to twice the allowable tolerance of the steel plate wall thickness).

After quenching, the raceway 5a is subjected to shot peeing to improve the wear resistance and the rolling fatigue life of the raceway 5a. Further, in order to improve creep resistance, an interlayer in the form of a porous sintered member made of bronze powder is formed on the outer peripheral surface of the outer race, and an outer layer of tetrafluoroethylene resin containing a filler is further formed on the interlayer.

As shown in Fig. 1, the outer race 5 comprises a tapered portion 10 where there is the raceway 5a, a flange portion 11 extending radially outwardly from the large-diameter end of the tapered portion 10, and a cylindrical portion 12 axially extending from the small-diameter end of the tapered portion 10. The inner periphery of the housing 2 is shaped corresponding to the shape of the outer periphery of the outer race 5. The outer race 5 is mounted in position in the housing 2 by inserting the outer race 5 into the inner periphery of the housing 2 such that the tapered portion 10 and the cylindrical portion 12 are pressed into the housing 2 until the flange portion 2 abuts the shoulder of the inner periphery of the housing 2.

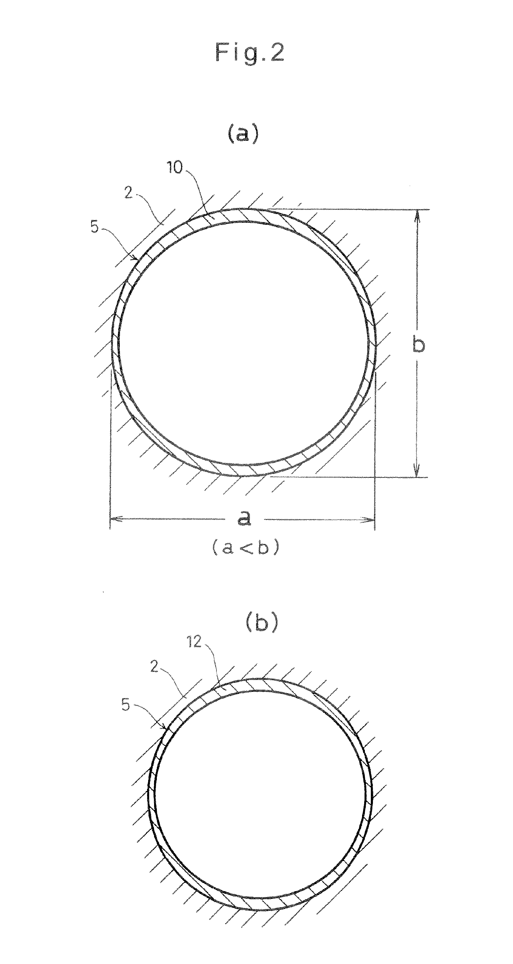

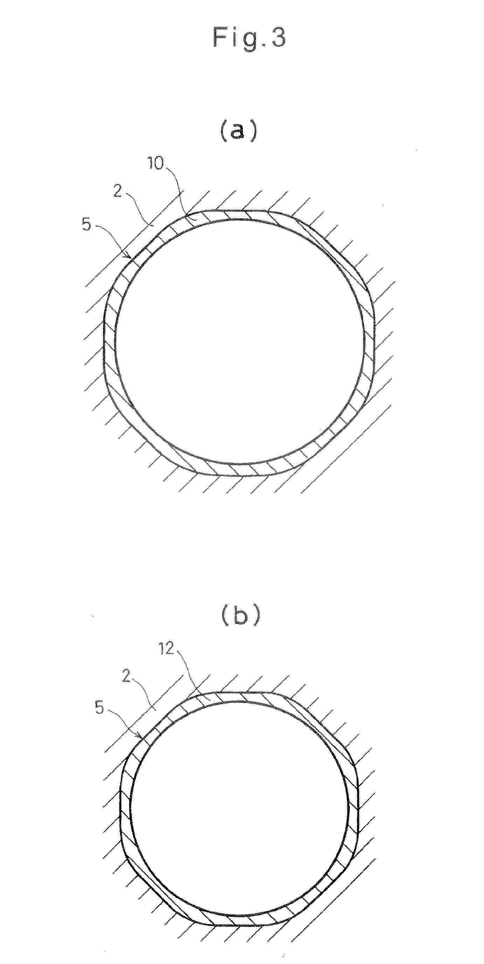

As shown in Fig. 2(a), the section of the tapered portion 10 of the outer race 5 perpendicular to the axis of the bearing is shaped such that its inner periphery is circular while its outer periphery is oval. The inner periphery of the tapered portion of the housing 2 is oval so as to be complementary to the oval shape of the outer periphery of the outer race tapered portion 10. With this arrangement, the outer race 5 cannot rotate, and is less likely to creep. Alternatively, as shown in Fig. 2(b), the outer periphery of the cylindrical portion 12 of the outer race 5 and the corresponding inner periphery of the housing 2 may have an oval shape to prevent rotation of the outer race 5. Further alternatively, as shown in Figs. 3(a) and 3(b), a portion of the outer periphery of the outer race 5 and the corresponding portion of the inner periphery of the housing 2 may have a polygonal shape with the corners rounded. Since the outer race 5 is formed by pressing while the housing 2 is formed by casting, their outer periphery and inner periphery can be relatively easily formed into an oval shape or a polygonal shape with the corners rounded.

With this tapered roller bearing 1, since the outer race 5 is formed by pressing a steel plate, it is not necessary to form the outer race 5 by turning. The outer race 5 can thus be manufactured at a low cost.

With the mounting structure of this tapered roller bearing 1, since the inner periphery of the housing 2 is shaped so as to correspond to the shape of the outer periphery of the outer race 5, and the tapered portion 10 and the cylindrical portion 12 of the outer race 5 are press-fitted into the housing 2 until the flange portion 11 of the outer race 5 abuts the shoulder of the inner periphery of the housing 2, the tapered roller bearing 1 can be easily mounted in position in the housing 2, and also can be easily disassembled for maintenance and can be replaced with a new one.

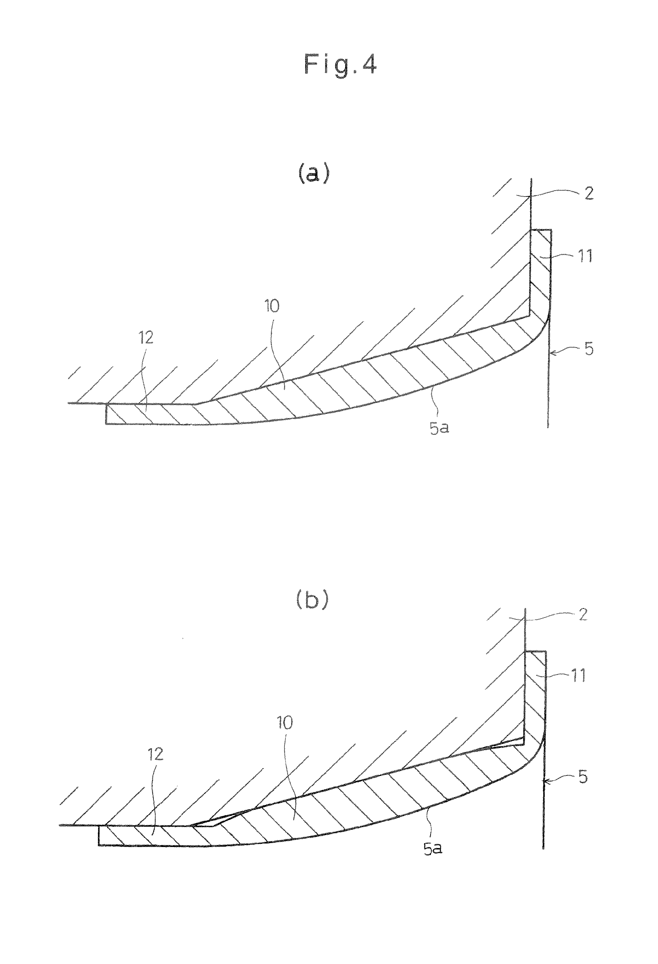

Figs. 4(a) and 4(b) show examples of which the outer race 5 is thinner in wall thickness at both end portions than at the central portion. In Fig. 4(a), the raceway 5a of the outer race 5 has a convex axial section. In Fig. 4(b), both the raceway 5a of the outer race 5 and the outer peripheral surface of the tapered portion 10 of the outer race 5 have convex axial sections. In these examples, compared to an arrangement in which the outer race has a uniform wall thickness, the surface pressure that acts on the outer race 5 during operation is uniform, so that the maximum surface pressure and the surface pressure transmitted from the edges of the rollers 6 are low. This improves the load resistance of the outer race.

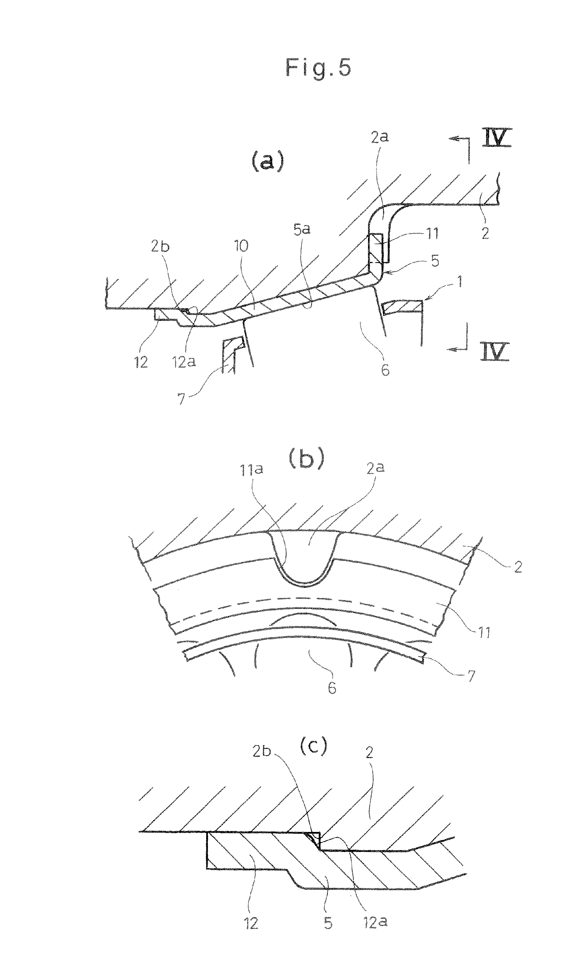

Figs. 5 to 7 show different mounting structures of the tapered roller bearing 1. In the example of Figs. 5(a) to 5(c), at least one cutout 11a is formed in the outer periphery of the flange portion 11 of the outer race 5, while the housing 2 has an engaging portion 2a configured to be engaged in the cutout 11a, thus preventing rotation of the outer race 5 (see Figs. 5(a) and 5(b)). With this arrangement, it is not necessary to design the inner peripheral surface of the housing 2 and the corresponding outer peripheral surface of the outer race 5 such that these surfaces both have an oval section as shown in Fig. 2 or a polygonal section with the corner rounded as shown in Fig. 3, as taken along a plane perpendicular to the axis of the outer race 5. But rather, these surfaces may be circular in section. As shown in Fig. 5(c), the outer peripheral surface of the cylindrical portion 12 may have a shoulder 12a such that the outer peripheral surface of the cylindrical portion 12 has a larger diameter at its distal end than at its proximal end, to prevent the outer race 5 from being pulled out of the housing (see Figs. 5(a) and 5(c)).

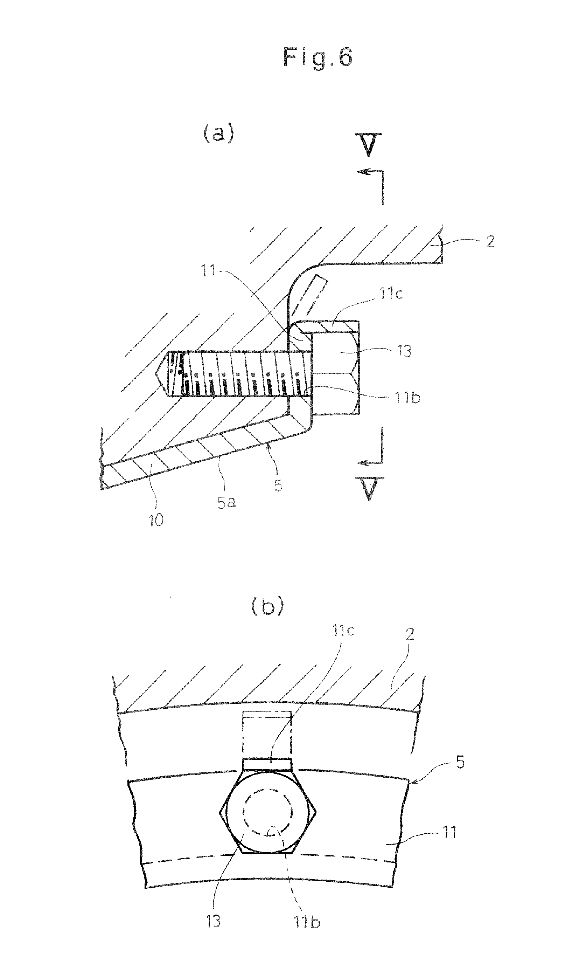

In the example of Figs. 6(a) and 6(b), at least one bolt hole 11b is formed in the flange portion 11 of the outer race 5, and a bolt 13 is passed through the bolt hole 11b and threaded into the housing 2. The flange portion 11 of the outer race 5 has a protrusion 11c protruding from the outer periphery of the flange 11 in the vicinity of the bolt hole 11b. By bending the protrusion 11c until the protrusion 11c abuts the head of the bolt 13 after the bolt 13 has been completely threaded into the housing 2, the protrusion 11c prevents loosening of the bolt 13. In this example, since the bolt 13 prevents rotation of the outer race 5 and also prevents the outer race 5 from being pulled out, the cylindrical portion 12 of the outer race 5 may be omitted.

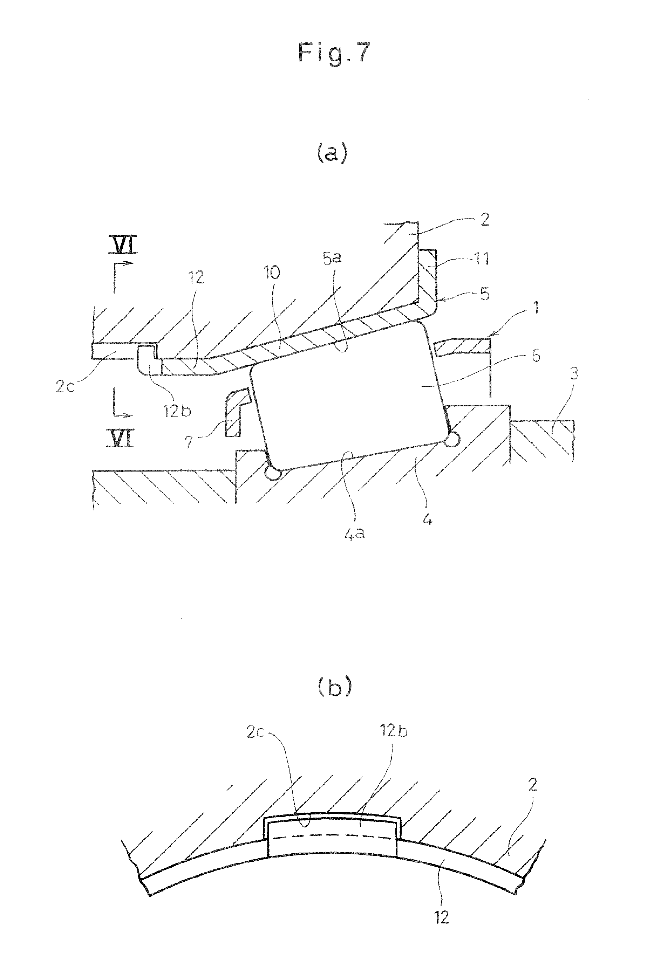

In the example of Figs. 7(a) and 7(b), at least one engaging protrusion 12b extends radially outwardly from the distal end of the cylindrical portion 12 of the outer race 5, while the housing 2 is formed with an engaging recess 2c in which the engaging protrusion 12b is configured to be engaged. Since this arrangement prevents the outer race 5 from being pulled out and also prevents rotation of the outer race, it is possible to omit the flange portion 11 of the outer race 5.

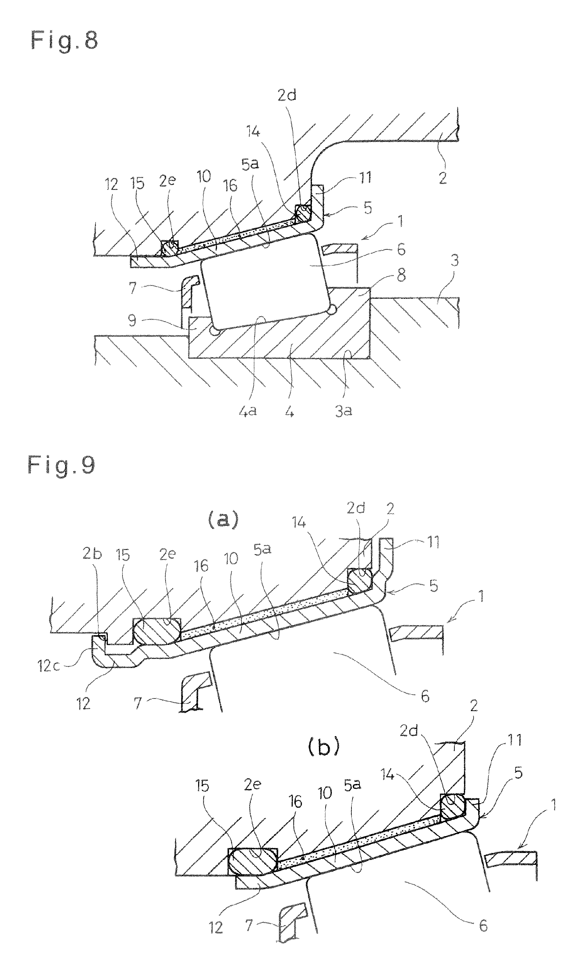

The second embodiment shown in Fig. 8 is basically of the same structure as the first embodiment, shown in Fig. 1. But in this embodiment, the outer race 5 of the tapered roller bearing 1 has neither of the sintered layer and the resin layer on the outer peripheral surface thereof. Instead, seal members in the form of O-rings 14 and 15 are fitted in annular recesses 2d and 2e formed in the housing 2 to face the respective ends of the outer race 5, and the space defined by the O-rings 14 and 15, the outer race 5 and the housing 2 is filled with a lubricant 16 to prevent creeping of the outer race 5. The seal members are not limited to O-rings but may be packings such as square rings or V-rings.

The outer races 5 of Figs. 9(a) and 9(b) differ in the shape of the respective both end portions from the outer race 5 of the tapered roller bearing 1 of the second embodiment. In Fig. 9(a), the flange portion 11 and the cylindrical portion 12 of the outer race 5 have steps at their respective intermediate portions. In Fig. 9(b), the flange portion 11 and the cylindrical portion 12 of the outer race 5 are both shorter than those of the second embodiment so that neither of the flange portion 11 and the cylindrical portion 12 of the outer race 5 contacts housing 2, thereby preventing creeping of the outer race. In the example of Fig. 9(a), the distal end of the cylindrical portion 12 of the outer race 5 is bent into the shape of a flange until this bent portion 12c faces an engaging surface 2b of the housing 2, thereby preventing the outer race 5 from being pulled out.

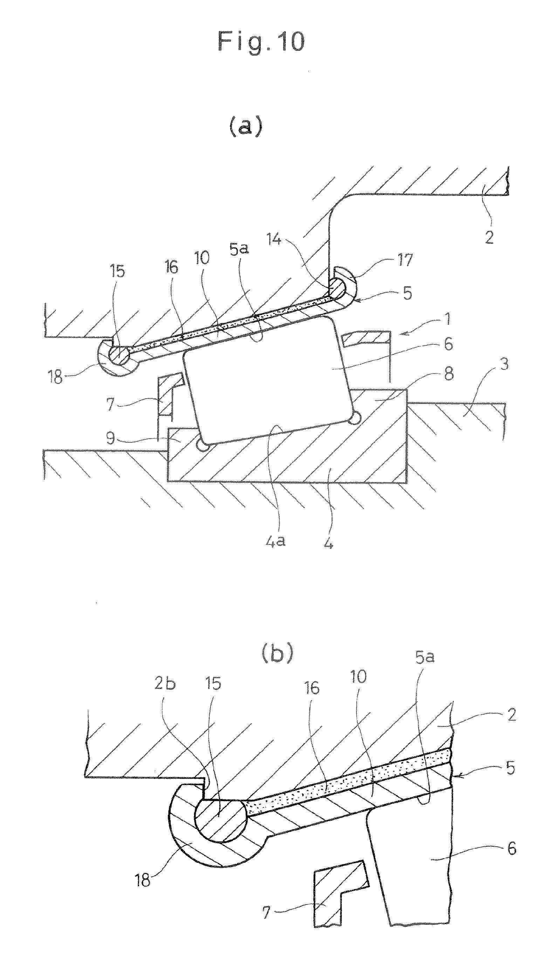

In the third embodiment shown in Figs. 10(a) and 10(b), as with the second embodiment, the outer race 5 of the tapered roller bearing 1 has no sintered layer or resin layer on the outer peripheral surface thereof. Instead, the outer race 5 is formed with curved portions 17 and 18 having openings facing the housing 2 at the respective ends thereof, and O-rings 14 and 15 are fitted in the respective curved portions 17 and 18 such that a space is defined by the O-rings 14 and 15, the outer race 5 and the housing 2. By filling this space with a lubricant 16, the lubricant 16 prevents creeping of the outer race 5. The curved portion 18 at the small-diameter end of the outer race 5 has its distal end arranged to axially face an engaging surface 2b of the housing 2 to prevent the outer race 5 from being pulled out.

### DESCRIPTION OF THE NUMERALS

1. Tapered roller bearing
2. Housing
2a. Engaging portion
2b. Engaging surface
2c. Engaging recess
2d, 2e. Annular recess
3. Rotary shaft
4. Inner race
4a. Raceway
5. Outer race
5a. Raceway
6. Tapered roller
10. Tapered portion
11. Flange portion
11a. Cutout
11b. Bolt hole
11c. Protrusion
12. Cylindrical portion
12a. Shoulder
12b. Engaging protrusion
14, 15. O-ring
16. Lubricant
17, 18. Curved portion

## Claims

1. A tapered roller bearing comprising an inner race having a tapered raceway, an outer race having a tapered raceway, a plurality of tapered rollers mounted between the tapered raceways of the inner race and the outer race, and a retainer rollably retaining the tapered rollers, **characterized in that** the outer race is formed by pressing a steel plate.

2. The tapered roller bearing of claim 1, wherein the raceway of the outer race is subjected to shot peening.

3. The tapered roller bearing of claim 1 or 2, wherein the raceway of the outer race has a convex axial section such that the outer race has a smaller wall thickness at two end portions of the outer race than at a central portion of the outer race.

4. The tapered roller bearing of claim 1 or 2, wherein the outer race comprises a tapered portion having the raceway of the outer race and an outer peripheral surface, wherein the raceway of the outer race and the outer peripheral surface of the tapered portion each have a convex axial section such that the outer race has a smaller wall thickness at two end portions of the outer race than at a central portion of the outer race.

5. The tapered roller bearing of any of claims 1 to 4, wherein an interlayer comprising a porous sintered member made of bronze powder is formed on an outer peripheral surface of the outer race, and wherein an outer layer made of tetrafluoroethylene resin containing a filler is superposed on the interlayer.

6. A mounting structure for mounting the outer race of the tapered roller bearing of any of claims 1 to 5 to a housing having an inner periphery corresponding in shape to an outer periphery of the outer race, **characterized in that** the outer race comprises a tapered portion having the raceway of the outer race, wherein the outer race further comprises at least one of a flange portion extending radially outwardly from a large-diameter end of the tapered portion and in engagement with the housing, and a cylindrical portion extending in an axial direction of the outer race from a small-diameter end of the tapered portion and in engagement with the housing.

7. The mounting structure of claim 6, wherein at least one cutout is formed in an outer periphery of the flange portion of the outer race, and wherein the housing is formed with an engaging portion engaged in the cutout.

8. The mounting structure of claim 6, wherein at least one bolt hole is formed in the flange portion of the outer race, and wherein a bolt is passed through the bolt hole and threaded into the housing.

9. The mounting structure of claim 8, wherein a protrusion is formed on an outer periphery of the flange portion of the outer race in a vicinity of the bolt hole, wherein the protrusion is bent so as to abut a head of the bolt with the bolt threaded into the housing, thereby preventing loosening of the bolt.

10. The mounting structure of claim 6, wherein the cylindrical portion of the outer race has an outer peripheral surface having a shoulder such that the outer peripheral surface of the cylindrical portion has a larger diameter at a distal end thereof than at a proximal end thereof, and wherein the housing is formed with an engaging surface facing the shoulder.

11. The mounting structure of claim 6, wherein at least one engaging protrusion extends radially outwardly from a distal end of the cylindrical portion, and wherein the housing is formed with an engaging recess in which the engaging protrusion is engaged.

12. The mounting structure of claim 6, wherein an outer periphery of the tapered portion and a portion of the inner periphery of the housing corresponding to the outer periphery of the tapered portion have an oval section or a polygonal section with corners rounded, as taken along a plane perpendicular to an axis of the outer race.

13. The mounting structure of claim 6, wherein an outer periphery of the cylindrical portion and a portion of the inner periphery of the housing corresponding to the outer periphery of the cylindrical portion have an oval section or a polygonal section with corners rounded, as taken along a plane perpendicular to an axis of the outer race.

14. A mounting structure for mounting the outer race of the tapered roller bearing of any of claims 1 to 4 to a housing having an inner periphery corresponding in shape to an outer periphery of the outer race, **characterized in that** the housing is formed with annular recesses facing two respective ends of the outer race, wherein seal members are received in the respective annular recesses such that a space is defined by the seal members, the outer race and the housing, and wherein the space is filled with a lubricant.

15. A mounting structure for mounting the outer race of the tapered roller bearing of any of claims 1 to 4 to a housing having an inner periphery corresponding in shape to an outer periphery of the outer race, **characterized in that** curved portions are formed at two respective ends of the outer race, the curved portions having openings facing the housing, wherein seal members are received in the respective curved portions such that a space is defined by the seal members, the outer race and the housing, and wherein the space is filled with a lubricant.

16. The mounting structure of claim 15, wherein the housing is formed with an engaging surface axially facing a distal end of one of the curved portions provided at a small-diameter end of the outer race.
